# EUROPÄISCHE PATENTANMELDUNG

(11) **EP 2 214 047 A1**
(43) Veröffentlichungstag der Anmeldung: **04.08.2010**
(21) Anmeldenummer: 09151768.0
(22) Anmeldetag: 30.01.2009
(51) Int. Cl.: G02C 5/20

(54) **Längeneinstellbarer Bügel für eine Brille**

(71) Anmelder: Eye-Systems GmbH, 7000 Chur (CH)
(72) Erfinder: Schwitter, Hugo, 7310 Bad Ragaz (CH)
(74) Vertreter: TBK-Patent

(57) **Zusammenfassung**

Der längeneinstellbare Bügel für eine Brille umfasst ein erstes Bügelteil 2 mit einer Ausnehmung 12 und ein zweites Bügelteil 4 mit einem Verbindungsabschnitt 14, der in die Ausnehmung 12 eingesetzt ist. Ein Rastvorsprung, der in der Ausnehmung oder am Verbindungsabschnitt 14 ausgebildet ist, steht in Eingriff mit einem Rasteinschnitt eines Rasters, das am bzw. im anderen dieser Elemente (Verbindungsabschnitt oder Ausnehmung 12) ausgebildet ist. Im Bereich seiner Ausnehmung hat das erste Bügelteil ein U-Profil, so dass die Ausnehmung 12 auf einer Längsseite 8 des ersten Bügelteils 2 eine langgestreckte Öffnung aufweist, durch die der Verbindungsabschnitt 14 in Richtung quer zur Bügellängsrichtung X in die Ausnehmung 12 einsetzt bar ist. Um dem Bügel eine gewünschte Bügellänge L zu geben, werden die beiden Bügelteile 2 und 4 zunächst in eine der gewünschten Bügellänge entsprechende Relativstellung in Bügellängsrichtung X gebracht, und erst danach wird der Verbindungsabschnitt 14 durch die langgestreckte Öffnung in die Ausnehmung 12 eingesetzt. Der eingesetzte Verbindungsabschnitt 14 wird zwischen Seitenwänden der Ausnehmung 12 so eingespannt, dass eine Relativbewegung zwischen dem Raster und dem Rastvorsprung im Sinne eines Abhebens des Rastvorsprungs vom Raster nicht möglich ist. Auf diese Weise wird eine unbeabsichtigte Änderung der gewünschten und eingestellten Bügellänge L verhindert.

## Beschreibung

Die Erfindung bezieht sich auf einen längeneinstellbaren Bügel für eine Brille.

Eine Brille weist ein Brillenmittelteil mit zwei Brillengläsern sowie zwei Bügel auf. Jeder der Bügel ist an seinem vorderen Ende mittels eines Gelenks mit dem Brillenmittelteil verbunden und weist an seinem hinteren Ende ein Bügelendstück auf, das zur Anlage im Bereich eines der beiden Ohren des Brillenträgers bestimmt ist. Um einen sicheren und bequemen Sitz der Brille am Kopf des Brillenträgers zu gewährleisten, sollte die Länge eines jeden Bügels den relevanten Abmessungen des Kopfes des Brillenträgers angepasst sein. Es ist daher zweckmäßig, wenn die Länge eines Bügels einstellbar ist. Unter Länge eines Bügels wird dessen gestreckte Länge vom Mittelpunkt des Gelenkes am vorderen Ende des Bügels bis zum Bügelende verstanden.

Ein längeneinstellbarer Bügel mit den Merkmalen des Oberbegriffs von Patentanspruch 1 ist bekannt (EP-A-0 396 110). Bei diesem bekannten Bügel hat das erste Bügelteil im Querschnitt ein Hohlprofil und ist die Ausnehmung ein sich in Bügellängsrichtung erstreckender Hohlraum. Der Verbindungsabschnitt ist in den Hohlraum eingesteckt und mit dem Raster aus aufeinander folgenden Rasteinschnitten versehen. Der Rastvorsprung ragt in den Hohlraum und steht in Eingriff mit einem der Rasteinschnitte des Rasters. In Abhängigkeit davon, mit welchem der Rasteinschnitte der Rastvorsprung in Eingriff steht, ist die Länge des Bügels unterschiedlich. Der Verbindungsabschnitt hat im Querschnitt eine geringere Abmessung als die lichte Weite des Hohlraumes, so dass der Verbindungsabschnitt im Hohlraum quer zur Bügellängsrichtung bewegt werden kann und dadurch der Eingriff zwischen dem Rastvorsprung und einem der Rasteinschnitte aufgehoben werden kann. Am vorderen Ende des Verbindungsabschnitts ist eine Feder ausgebildet, die auf den Verbindungsabschnitt derart wirkt, dass sie dessen Raster zum Rastvorsprung drückt, um auf diese Weise den Rastvorsprung mit einem der Rasteinschnitte in Eingriff zu halten. Um die Länge des Bügels einzustellen bzw. zu verändern, wird der Verbindungsabschnitt innerhalb des Hohlraumes entgegen der Wirkung der Feder im Wesentlichen quer zur Bügellängsrichtung von Hand verlagert, so dass der Eingriff zwischen dem Rastvorsprung und dem Rasteinschnitt aufgehoben wird, wonach der Verbindungsabschnitt innerhalb des Hohlraums in Bügellängsrichtung verschoben wird, bis der Bügel die gewünschte Länge hat und der Rastvorsprung einem der gewünschten Länge entsprechenden, ausgewählten Rasteinschnitt gegenüberliegt. Wenn danach der Verbindungsabschnitt bzw. das zweite Bügelteil freigegeben wird, werden der Rastvorsprung und der ausgewählte Rasteinschnitt durch die Wirkung der Feder in Eingriff miteinander gebracht.

Bei dem bekannten Bügel werden der Rastvorsprung und der ausgewählte Rasteinschnitt durch die Wirkung der Feder miteinander in Eingriff gehalten. Eine in Bügellängsrichtung zwischen dem ersten und dem zweiten Bügelteil wirkende Druck- oder Zugkraft führt dazu, dass der Rastvorsprung gegen eine Flanke des Rasteinschnitts drückt und auf den Verbindungsabschnitt eine der Wirkung der Feder entgegen gerichtete Kraft ausübt. Diese Kraft kann dazu führen, dass der Verbindungsabschnitt so weit verlagert wird, dass der Eingriff zwischen dem Rastvorsprung und dem Rasteinschnitt aufgehoben wird und der Verbindungsabschnitt im Hohlraum in Bügellängsrichtung verschoben wird und die gewünschte und eingestelle Länge des Bügels nicht erhalten bleibt.

Der Erfindung liegt die Aufgabe zugrunde, einen längeneinstellbaren Bügel für eine Brille zu schaffen, bei dem die gewünschte und eingestellte Länge des Bügels zuverlässig beibehalten wird.

Erfindungsgemäß wird diese Aufgabe gelöst durch den in Patentanspruch 1 definierten Bügel. Bei diesem ist vorgesehen, dass das erste Bügelteil im Bereich seiner Ausnehmung im Querschnitt ein U-Profil hat, so dass die Ausnehmung auf einer Längsseite des ersten Bügelteils eine langgestreckte Öffnung aufweist und durch eine Bodenwand sowie ein erste und eine zweite, jeweils in Bügellängsrichtung verlaufende Seitenwand begrenzt ist. Die langgestreckte Öffnung ist derart dimensioniert, dass der Verbindungsabschnitt bei der gewünschten Länge des Bügels in Richtung quer zur Bügellängsrichtung in die Ausnehmung einsetzbar ist. Das Raster ist an der ersten Seitenwand der Ausnehmung oder an einer der ersten Seitenwand zugewandten, ersten Längsseite des Verbindungsabschnitts ausgebildet, und der Rastvorsprung ist dem Raster zugewandt ausgebildet, also an der ersten Längsseite des Verbindungsabschnitts, wenn das Raster an der ersten Seitenwand der Ausnehmung ausgebildet ist, oder an der ersten Seitenwand, wenn das Raster an der ersten Längsseite des Verbindungsabschnitts ausgebildet ist. Die zweite Seitenwand stützt den Verbindungsabschnitt an einer zweiten Längsseite desselben, die der ersten Längsseite des Verbindungsabschnitts gegenüberliegt, derart ab, dass durch diese Abstützung eine Relativbewegung zwischen dem Raster und dem Rastvorsprung senkrecht zu der ersten Seitenwand verhindert ist.

Bei dem erfindungsgemäßen Bügel hat die Ausnehmung die seitliche, langgestreckte Öffnung, die derart dimensioniert ist, dass der Verbindungsabschnitt quer zur Bügellängsrichtung in die Ausnehmung einsetzbar ist. Dies wird bei dem erfindungsgemäßen Bügel dazu genutzt, das erste Bügelteil und das zweite Bügelteil in Bügellängsrichtung in eine der gewünschten Bügellänge entsprechende Relativstellung zu bringen, bevor der Verbindungsabschnitt in die Ausnehmung eingesetzt wird. Erst wenn das erste und zweite Bügelteil die der gewünschten Länge entsprechende Relativstellung zueinander haben, wird der Verbindungsabschnitt quer zur Bügellängsrichtung in die Ausnehmung eingesetzt. Während dieses Einssetzens wird der Rastvorsprung in Eingriff mit einem der Rasteinschnitte gebracht.

Bei dem erfindungsgemäßen Bügel ist es weder erforderlich, noch vorgesehen, dass der Verbindungsabschnitt in der Ausnehmung in Bügellängsrichtung verschoben werden kann. Gestaltungsmerkmale, die eine solche Verschiebung ermöglichen, und Gestaltungsmerkmale, die es ermöglichen, den Eingriff zwischen dem Rastvorsprung und einem der Rasteinschnitte zunächst zu lösen und nach einer Verschiebung des Verbindungsabschnitts in der Ausnehmung wiederherzustellen, weist der erfindungsgemäße Bügel nicht auf. Vielmehr ist bei dem erfindungsgemäßen Bügel jede Verschiebung des Verbindungsabschnitts in der Ausnehmung in Bügellängsrichtung verhindert, und zwar dadurch, dass der Verbindungsabschnitt zwischen den beiden Seitenwänden der Ausnehmung so eingeklemmt bzw. eingespannt ist, dass der Rastvorsprung nicht vom Raster abgehoben werden kann und das Raster nicht vom Rastvorsprung abgehoben werden kann. Wenn der Verbindungsabschnitt in die Ausnehmung eingesetzt ist, stehen der Rastvorsprung und derjenige der Rasteinschnitte, mit dem der Rastvorsprung während des Einsetzens in Eingriff gebracht worden ist, stets in Eingriff miteinander, so dass eine Relativverschiebung in Bügellängsrichtung zwischen den beiden Bügelteilen nicht möglich ist und die gewünschte und eingestellte Länge des Bügels auch dann beibehalten wird, wenn eine größere Zug- bzw. Druckkraft in Bügellängsrichtung auf den Bügel wirkt. Die gewünschte und eingestellte Bügellänge wird somit zuverlässig beibehalten.

Wenn es gewünscht wird, eine zunächst eingestellte Bügellänge zu ändern, wird der Verbindungsabschnitt quer zur Bügellängsrichtung entgegen der Richtung, in der er eingesetzt worden ist, aus der Ausnehmung herausbewegt und erneut in diese eingesetzt, nachdem das erste und zweite Bügelteil in die der neu einzustellenden Länge entsprechende Relativstellung in Bügellängsrichtung gebracht worden sind.

Vorteilhafte Ausgestaltungen der Erfindung sind in den abhängigen Ansprüchen definiert.

Ausführungsbeispiele der Erfindung sind in den Zeichnungen dargestellt und werden im Folgenden näher erläutert. Es zeigen:
- Figur 1: in schematischer und perspektivischer Darstellung ausschnittsweise einen Bügel gemäß einem ersten Ausführungsbeispiel der Erfindung;
- Figur 2: in ähnlicher Darstellung wie in Figur 1 ein erstes Bügelteil und ein zweites Bügelteil des Bügels gemäß dem ersten Ausführungsbeispiel, wobei diese Bügelteile getrennt voneinander gezeigt sind in einem Zustand, den sie einnehmen, bevor sie miteinander verbunden werden;
- Figur 3: in perspektivischer Darstellung das zweite Bügelteil bei Betrachtung von schräg unten;
- Figur 4: eine ausschnittsweise Ansicht des Bügels bei Betrachtung aus Richtung A in Figur 1;
- Figur 5: eine Schnittdarstellung des Bügels gemäß B-B in Figur 1;
- Figur 6: eine Figur 5 entsprechende Darstellung einer abgewandelten Ausführungsform des Bügels gemäß dem ersten Ausführungsbeispiel;
- Figur 7: eine Figur 5 entsprechende Darstellung einer weiteren abgewandelten Ausführungsform des Bügels gemäß dem ersten Ausführungsbeispiel;
- Figur 8: eine perspektivische und ausschnittsweise Darstellung eines Bügels gemäß einem zweiten Ausführungsbeispiel der Erfindung bei Betrachtung von schräg oben, wobei ein erstes Bügelteil und ein zweites Bügelteil getrennt voneinander dargestellt sind;
- Figur 9: den Bügel gemäß Figur 8 bei Betrachtung von schräg unten; und
- Figur 10: eine Schnittdarstellung gemäß C-C in Figur 8, wobei abweichend von Figur 8 die beiden Bügelteile im zusammengesetzten Zustand dargestellten sind.

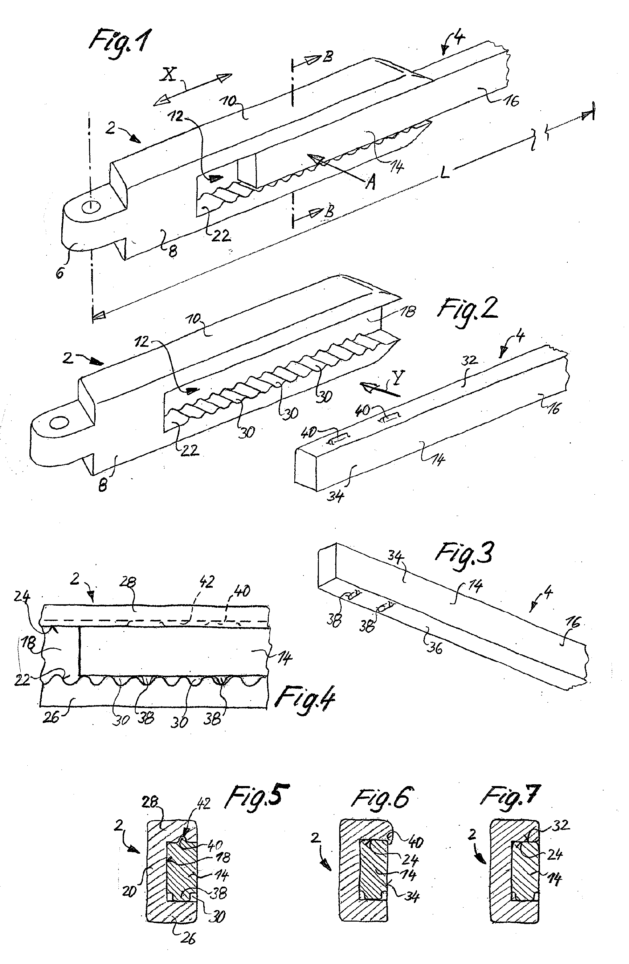

Im Folgenden wird zunächst unter Bezugnahme auf die Figuren 1 bis 5 ein erstes Ausführungsbeispiel des längeneinstellbaren Bügels gemäß der Erfindung erläutert.

Bei dem dargestellten Bügel handelt es sich um den rechten Bügel einer Brille. Mit Ausnahme der Bezeichnung dieses Bügels als rechter Bügel beziehen sich die im Folgenden verwendeten Ausdrücke "links" und "rechts" und ebenso die Ausdrücke "oben" und "unten" auf die Figuren 1 bis 3.

Der dargestellte Bügel umfasst ein erstes Bügelteil 2 und ein zweites Bügelteil 4. Die beiden Bügelteile 2 und 4 sind jeweils langgestreckte Elemente, die sich in der durch einen Pfeil X gezeigten Bügellängsrichtung erstrecken. Die beiden Bügelteile 2 und 4 sind aus einem geeigneten Kunststoff gefertigt, können jedoch auch aus Metall oder einem Verbundwerkstoff aus Metall und Kunststoff bestehen.

Das erste Bügelteil 2 weist an seinem linken, vorderen Ende ein Gelenkauge 6 auf, das Element eines im Übrigen nicht dargestellten Gelenks ist, mittels dessen der Bügel mit einem Brillenmittelteil (nicht dargestellt) gelenkig verbunden ist. Auf die Ausbildung des Gelenks kommt es für die Erfindung nicht an; dementsprechend ist das dargestellte Gelenkauge 6 lediglich ein Beispiel für ein am vorderen Ende des ersten Bügelteils 2 vorgesehenes Gelenkelement. Das erste Bügelteil 2 hat im Wesentlichen die Gestalt eines Stabes oder Zylinders und weist mehrere Längsseiten auf, von denen in den Figuren 1 und 2 eine Innenseite 8 und eine Oberseite 10 sichtbar sind. Es versteht sich, dass die Längsseiten des ersten Bügelteils 2, anders als dargestellt, statt an einer Kante aneinander zu stoßen, gerundet ineinander übergehen können. Ferner ist das erste Bügelteil 2 mit einer Ausnehmung 12 versehen, die am rechten, hinteren Ende des ersten Bügelteils 2 offen ist und weiter unten näher erläutert wird.

Das zweite Bügelteil 4 umfasst einen in der Ausnehmung 12 angeordneten Verbindungsabschnitt 14, der an seinem rechten, hinteren Ende in einen nur teilweise dargestellten Bügelschaft 16 übergeht, an dessen hinterem Ende ein Bügelendstück (nicht dargestellt) angeordnet ist. Zumindest der Verbindungsabschnitt 14 und der Bügelschaft 16 haben im Wesentlichen die Gestalt eines Stabes oder Zylinders.

Bei dem dargestellten Ausführungsbeispiel umfasst das zweite Bügelteil 4 außer dem Verbindungsabschnitt 14 den Bügelschaft 16 und das Bügelendstück und umfasst das erste Bügelteil 2, an dem die Ausnehmung 12 ausgebildet ist, ein Gelenkelement beispielsweise in Form des Gelenkauges 6. Abweichend davon kann das erste Bügelteil 2 an seinem linken Ende in einen Bügelschaft übergehen, der ein Bügelendstück trägt. Dementsprechend umfasst in diesem Fall das zweite Bügelteil 4 außer dem Verbindungsabschnitts 14 ein am rechten Ende des Verbindungsabschnitts 14 angeordnetes bzw. ausgebildetes Gelenkelement.

Das erste Bügelteil 2 hat im Bereich seiner Ausnehmung 12 im Querschnitt, das heißt in einer Schnittebene senkrecht zur Bügellängsrichtung X, ein U-Profil, wie dies insbesondere in Figur 5 erkennbar ist. Dadurch ist die Ausnehmung 12 begrenzt durch eine sich in Bügellängsrichtung X erstreckende Bodenwand 18, die an einem Steg 20 des U-Profils ausgebildet ist, und zwei sich in Bügellängsrichtung X erstreckende Seitenwände 22 und 24, die jeweils an einem der Flansche 26 und 28 des U-Profils ausgebildet sind.

Bei dem dargestellten Ausführungsbeispiel begrenzt die Seitenwand 22 die Ausnehmung 12 unten und begrenzt die Seitenwand 24 die Ausnehmung oben. Wegen des U-Profils des ersten Bügelteils 2 im Bereich der Ausnehmung 12 ist die Ausnehmung 12 auf einer der Längsseiten des ersten Bügelteils 2 nicht geschlossen sondern offen, so dass diese Längsseite eine langgestreckte, in Bügellängsrichtung X verlaufende Öffnung aufweist. Bei dem dargestellten Bügel ist die Innenseite 8 diejenige Längsseite, die mit der langgestreckten Öffnung versehen ist. Abweichend davon kann eine der übrigen Längsseiten des ersten Bügelteils 2 mit der langgestreckten Öffnung versehen sein.

An einer der beiden Seitenwände 22 und 24 der Ausnehmung 12, im dargestellten Fall an der Seitenwand 22, ist ein Raster ausgebildet. Dieses Raster hat ein Profil ähnlich dem einer Zahnstange und weist eine Vielzahl von durch Zahnzwischenräume gebildeten, in Bügellängsrichtung X aufeinander folgenden Rasteinschnitten 30 auf.

Der Verbindungsabschnitt 14 weist Längsseiten auf, von denen in den Figuren 1 und 2 eine Oberseite 32 und eine Vorderseite 34 sichtbar sind und in Figur 3 ferner eine Unterseite 36 sichtbar ist. Im Querschnitt hat der Verbindungsabschnitt 14 ein solches Profil, dass der Verbindungsabschnitt 14 in die Ausnehmung 12 passt und, wenn der Verbindungsabschnitt 14 in die Ausnehmung 12 eingesetzt ist, wie dies in Figur 1 gezeigt ist, die Unterseite 36 des Verbindungsabschnitts 34 der Seitenwand 22 der Ausnehmung 12 zugewandt ist und die Oberseite 32 des Verbindungsabschnitts 14 der Seitenwand 24 der Ausnehmung 12 zugewandt ist. Dabei sind die Abmessungen der Ausnehmung 12 einschließlich von deren langgestreckter Öffnung und die Abmessungen des Verbindungsabschnitts 14 derart gewählt, dass der Verbindungsabschnitt 14 in Querrichtung Y, das heißt quer zur Bügellängsrichtung X und im Wesentlichen in Richtung senkrecht zu der die langgestreckte Öffnung aufweisenden Innenseite 8, in die Ausnehmung 12 eingesetzt werden kann und im eingesetzten Zustand zwischen den beiden Seitenwänden 22 und 24 positioniert ist und von diesen Seitenwänden gehalten wird.

Der Verbindungsabschnitt 14 ist auf seiner Unterseite 36 mit zumindest einem Rastvorsprung 38 versehen, der derart dimensioniert ist, dass er mit einem der Rasteinschnitte 30 in Eingriff treten kann. Wie Figur 3 zeigt, sind beim dargestellten Ausführungsbeispiel zwei derartige Rastvorsprünge 38 vorgesehen. Abweichend davon kann eine Vielzahl von in Bügellängsrichtung X aufeinander folgenden Rastvorsprüngen 38 am Verbindungsabschnitt 14 ausgebildet sein, die dann ein zweites Raster bilden. Auf der Oberseite 32 des Verbindungsabschnitts 14 ist zumindest ein Haltevorsprung 40 in Form einer in Bügellängsrichtung X verlaufenden Leiste ausgebildet, wobei in Figur 2 zwei derartige Haltevorsprünge 40 gezeigt sind. Die Haltevorsprünge 40 sind zum Eingriff mit einer in Bügellängsrichtung X verlaufenden Nut 42 bestimmt, die in der Seitenwand 24 der Ausnehmung 12 ausgebildet ist (siehe Figuren 4 und 5).

Die beiden Bügelteile 2 und 4 werden in folgender Weise miteinander verbunden. Die noch voneinander getrennten Bügelteile 2 und 4 werden zunächst in etwa parallel zueinander angeordnet und in eine der gewünschten Bügellänge L (siehe Figur 1) entsprechend Relativstellung in Bügellängsrichtung X gebracht. Danach wird der Verbindungsabschnitt 14 in der Querrichtung Y in die Ausnehmung 12 eingedrückt. Dabei treten die Rastvorsprünge 38 in Eingriff mit jeweils einem der Rasteinschnitte 30. Zugleich gelangt die Oberseite 32 des Verbindungsabschnitts in Kontakt mit der Seitenwand 24, wobei die Haltevorsprünge 40 in Querrichtung Y entlang der Seitenwand 24 gleiten, bis sie schließlich in die Nut 42 eintreten bzw. einschnappen. Die Höhe der Haltevorsprünge 40 und die Elastizität des ersten Bügelteils 2 sind derart bemessen, dass sie dieses Einschnappen ermöglichen. Auf diese Weise wird der in den Figuren 1, 4 und 5 gezeigte Zustand erreicht, in dem der Verbindungsabschnitt 14 in die Ausnehmung 12 des ersten Bügelteils 2 eingesetzt ist und der Bügel die gewünschte Bügellänge L hat.

Wenn der Verbindungsabschnitt 14 in die Ausnehmung 12 eingesetzt ist, stützt die Seitenwand 24 durch direkten Kontakt mit der Oberseite 32 des Verbindungsabschnitts 14 und/oder durch Kontakt ihrer Nut 42 mit den Haltevorsprüngen 40 den Verbindungsabschnitt 14 derart ab, dass eine Relativbewegung zwischen der Unterseite 36 des Verbindungsabschnitts 14 und der Seitenwand 22, an der das Raster mit den Rasteinschnitten 30 ausgebildet ist, verhindert ist. Mit anderen Worten, der Verbindungsabschnitt 14 ist zwischen den beiden Seitenwänden 22 und 24 der Ausnehmung 12 spielfrei eingespannt. Selbst größere Zug- oder Druckkräfte, die in Bügellängsrichtung X auf den Bügel einwirken, können die Rastvorsprünge 38 nicht aus denjenigen Rasteinschnitten 30 herausbewegen, mit denen die Rastvorsprünge 38 während des Einsetzens des Verbindungsabschnitts 14 in die Ausnehmung 12 in Eingriff getreten sind. Der Bügel behält somit stets die gewünschte, eingestellte Bügellänge.

Der Vollständigkeit halber sei klargestellt, dass das erste Bügelteil 2 zwar eine gewisse Elastizität hat, die das Einschnappen der Haltevorsprünge 40 in die Nut 42 ermöglicht. Diese Elastizität ist jedoch nicht derart, dass der gesamte Flansch 26, an dem die Seitenwand 22 und das Raster mit den Rasteinschnitten 30 ausgebildet sind, so stark deformiert werden kann, dass die Rastvorsprünge 38 außer Eingriff mit dem jeweils zugeordneten Rasteinschnitt 30 gelangen.

Bei dem vorstehend beschriebenen ersten Ausführungsbeispiel der Erfindung bilden die Haltevorsprünge 40 und die Nut 42 eine Halteeinrichtung, die den Verbindungsabschnitt 14 in der Ausnehmung 12 hält und sichert, indem sie eine Haltekraft entgegen der Querrichtung Y bewirkt. Dadurch wird ein unbeabsichtigtes Lösen des zweiten Bügelteils 4 von ersten Bügelteil 2 verhindert. Bei dieser Halteeinrichtung wird die Haltekraft durch Formschluss zwischen den Haltevorsprüngen 40 und der Nut 42 bewirkt.

Figur 6 zeigt eine abgewandelte formschlüssige Halteeinrichtung. Diese Halteeinrichtung umfasst ebenfalls einen Haltevorsprung 40 in Form einer in Bügellängsrichtung verlaufenden Leiste. In diesem Fall ist der Haltevorsprung 40 am ersten Bügelteil 2 neben der zweiten Seitenwand 24 derart ausgebildet, dass er den Verbindungsabschnitt 14 auf dessen Vorderseite 34 hintergreift. In diesem Fall entfällt die Nut 42.

Ferner kann die Haltekraft der Halteeinrichtung zusätzlich oder allein durch Kraftschluss bewirkt sein. Figur 7 zeigt eine abgewandelte Ausführungsform, bei der die Haltekraft allein durch Kraftschluss bewirkt wird, nämlich durch Haftreibung zwischen der oberen Seitenwand 24 der Ausnehmung 12 und der Oberseite 32 des Verbindungsabschnitts 14.

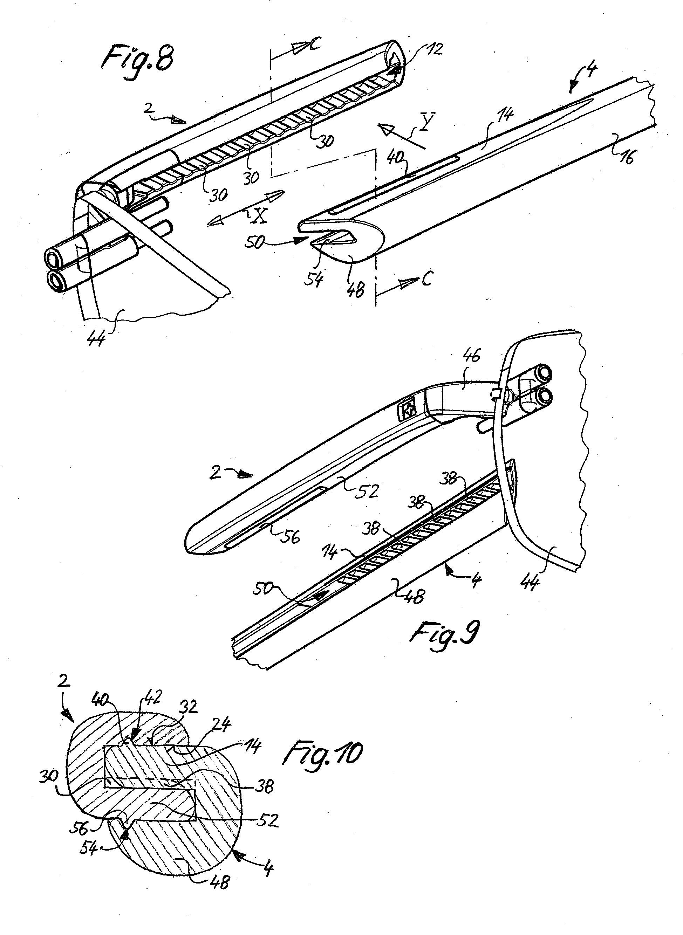

Im Folgenden wird unter Bezugnahme auf die Figuren 8 bis 10 ein zweites Ausführungsbeispiel des längeneinstellbaren Bügels gemäß der Erfindung erläutert. Elemente des Bügels gemäß dem zweiten Ausführungsbeispiels, die Elementen des Bügels gemäß dem ersten Ausführungsbeispiel entsprechen, sind mit gleichen Bezugszeichen wie bei dem ersten Ausführungsbeispiel versehen, und für diese Elemente gelten die bereits vorstehend im Zusammenhang mit dem ersten Ausführungsbeispiel gemachten Erläuterungen.

Die Figuren 8 und 9 zeigen ausschnittsweise ein rechtes Brillenglas 44, an dem eine Backe 46 befestigt ist, mit der das erste Bügelteil 2 gelenkig verbunden ist. Das erste Bügelteil 2 hat die Ausnehmung 12, die auf der Innenseite des ersten Bügelteils 2 die langgestreckte Öffnung aufweist, an deren unterer Seitenwand das Raster aus den in Bügellängsrichtung X aufeinander folgenden Rasteinschnitten 30 ausgebildet ist.

Das zweite Bügelteil 4 umfasst den Verbindungsabschnitt 14, auf dessen Unterseite die Rastvorsprünge 38 ausgebildet sind. Bei diesem Ausführungsbeispiel sind eine Vielzahl der Rastvorsprünge 38 vorgesehen, die in Bügellängsrichtung X aufeinander folgend angeordnet sind und ein zweites Raster bilden. Auf seiner Oberseite weist der Verbindungsabschnitt 14 den Haltevorsprung 40 auf, der durch eine einzige, in Bügellängsrichtung X verlaufende Leiste gebildet ist. Der Haltevorsprung 40 steht mit der in Figur 10 erkennbaren Nut 42 in Eingriff und bildet die Halteeinrichtung, die ihre Haltekraft durch Formschluss bewirkt.

Hinsichtlich des Einsetzens des Verbindungsabschnitts 14 des Bügels gemäß dem zweiten Ausführungsbeispiel in die Ausnehmung 12 des ersten Bügelteils 2 gilt die diesbezügliche Erläuterung im Zusammenhang mit dem ersten Ausführungsbeispiel. Es werden die dort erläuterten Vorteile im Hinblick auf die Beibehaltung der gewünschten und eingestellten Bügellänge erzielt.

Bei dem ersten Ausführungsbeispiel hat der Verbindungsabschnitt 14 in vertikaler Richtung eine größere Abmessung als in der Querrichtung. Der Verbindungsabschnitt 14 des Bügels gemäß dem zweiten Ausführungsbeispiel hat in der Querrichtung eine größere Abmessung als in der vertikalen Richtung, wie dies insbesondere in Figur 10 erkennbar ist. Ferner unterscheidet sich das zweite Bügelteil 4 des Bügels gemäß dem zweiten Ausführungsbeispiel vom zweiten Bügelteil 4 gemäß dem ersten Ausführungsbeispiel dadurch, dass es im Bereich seines Verbindungsabschnitts 14 im Querschnitt ebenfalls ein U-Profil hat. Dementsprechend weist das zweite Bügelteil 4 zusätzlich zu dem Verbindungsabschnitt 14 einen parallel zu diesem in Bügellängsrichtung X verlaufenden Leistenabschnitt 48 auf, der zusammen mit dem Verbindungsabschnitt 14 eine zweite langgestreckte und seitlich offene Ausnehmung 50 begrenzt. In diese zweite Ausnehmung 50 ist derjenige Abschnitt 52 des ersten Bügelteils 2 eingesetzt, an dem die die Rasteinschnitte 30 aufweisende Seitenwand ausgebildet ist. Dadurch ergibt sich die in Figur 10 erkennbare Anordnung aus zwei ineinander eingesetzten U-Profilen, die einen insgesamt steiferen Bügel zur Folge hat.

Der Bügel gemäß dem zweiten Ausführungsbeispiel weist zusätzlich zu der durch den Haltevorsprung 40 und die Nut 42 gebildeten ersten Halteeinrichtung eine zweite Halteeinrichtung auf, die ebenfalls als formschlüssige Halteeinrichtung ausgebildet ist und eine in Bügellängsrichtung X verlaufende Nut 54 sowie einen als Leiste ausgebildeten Haltevorsprung 56 umfasst. Die Nut 54 ist in der dem eingesetzten Abschnitt 52 zugewandten Oberfläche des Leistenabschnitts 48 ausgebildet, und der Haltevorsprung 56 ist an der dem Leistenabschnitt 48 zugewandten Oberfläche des eingesetzten Abschnitts 52 ausgebildet.

Der Leistenabschnitt 48 liegt unter Druck an dem eingesetzten Abschnitt 52 an. Da bei dem zweiten Ausführungsbeispiel nicht nur der Verbindungsabschnitt 14 zwischen den beiden Seitenwänden 22 und 24 der Ausnehmung 12 des ersten Bügelteils 2 eingespannt ist, sondern auch der Abschnitt 52 des ersten Bügelteils 2 zwischen dem Verbindungsabschnitt 14 und dem Leistenabschnitt 48 des zweiten Bügelteils 4 eingespannt ist, ist bei dem zweiten Ausführungsbeispiel mit noch größerer Zuverlässigkeit als bei dem ersten Ausführungsbeispiel dafür gesorgt, dass der Eingriff zwischen den Rasteinschnitt 30 und den Rastvorsprüngen 38 stets erhalten bleibt und die gewünschte und eingestellte Bügellänge beibehalten wird.

Der längeneinstellbare Bügel für eine Brille umfasst ein erstes Bügelteil mit einer Ausnehmung und ein zweites Bügelteil mit einem Verbindungsabschnitt, der in die Ausnehmung eingesetzt ist. Ein Rastvorsprung, der in der Ausnehmung oder am Verbindungsabschnitt ausgebildet ist, steht in Eingriff mit einem Rasteinschnitt eines Rasters, das am bzw. im anderen dieser Elemente (Verbindungsabschnitt oder Ausnehmung) ausgebildet ist. Im Bereich seiner Ausnehmung hat das erste Bügelteil ein U-Profil, so dass die Ausnehmung auf einer Längsseite des ersten Bügelteils eine langgestreckte Öffnung aufweist, durch die der Verbindungsabschnitt in Richtung quer zur Bügellängsrichtung in die Ausnehmung einsetzt bar ist. Um dem Bügel eine gewünschte Bügellänge zu geben, werden die beiden Bügelteile zunächst in eine der gewünschten Bügellänge entsprechende Relativstellung in Bügellängsrichtung gebracht, und erst danach wird der Verbindungsabschnitt durch die langgestreckte Öffnung in die Ausnehmung eingesetzt. Der eingesetzte Verbindungsabschnitt wird zwischen Seitenwänden der Ausnehmung so eingespannt, dass eine Relativbewegung zwischen dem Raster und dem Rastvorsprung im Sinne eines Abhebens des Rastvorsprungs vom Raster nicht möglich ist. Auf diese Weise wird eine unbeabsichtigte Änderung der gewünschten und eingestellten Bügellänge verhindert.

## Patentansprüche

1. Längeneinstellbarer Bügel für eine Brille, mit einem ersten sich in Längsrichtung (X) des Bügels erstreckenden Bügelteil (2) und einem zweiten sich in der Bügellängsrichtung (X) erstreckenden Bügelteil (4),
wobei das erste Bügelteil (2) eine sich in der Bügellängsrichtung (X) erstrechende Ausnehmung (12) aufweist,
wobei das zweite Bügelteil (4) einen Verbindungsabschnitt (14) aufweist, der sich in der Bügellängsrichtung (X) erstreckt und in die Ausnehmung (12) des ersten Bügelteils (2) eingesetzt ist,
wobei an dem Verbindungsabschnitt (14) oder in der Ausnehmung (12) ein Raster aus in der Bügellängsrichtung (X) aufeinander folgenden Rasteinschnitten (30) ausgebildet ist, und
wobei, wenn das Raster am Verbindungsabschnitt (14) ausgebildet ist, in der Ausnehmung (12) oder, wenn das Raster in der Ausnehmung (12) ausgebildet ist, am Verbindungsabschnitt (14) ein Rastvorsprung (38) ausgebildet ist, der mit einem der Rasteinschnitte (30) in Eingriff steht, wobei eine gewünschte Länge (L) des Bügels einstellbar ist durch Zuordnung des Rastvorsprungs (38) zu einem ausgewählten der Rasteinschnitte (30) des Raster,
**dadurch gekennzeichnet,**
**dass** das erste Bügelteil (2) im Bereich seiner Ausnehmung (12) im Querschnitt ein U-Profil hat, so dass die Ausnehmung (12) auf einer Längsseite (8) des ersten Bügelteils (2) eine langgestreckte Öffnung aufweist und durch eine Bodenwand (18) sowie eine erste und eine zweite, jeweils in Bügellängsrichtung (X) verlaufende Seitenwand (22, 24) begrenzt ist,
**dass** die langgestreckte Öffnung derart dimensioniert ist, dass der Verbindungsabschnitt (14) bei der gewünschten Länge (L) des Bügels in Richtung (Y) quer zu der Bügellängsrichtung (X) in die Ausnehmung (12) einsetzbar ist,
**dass** das Raster an der ersten Seitenwand (22) der Ausnehmung (12) oder an einer der ersten Seitenwand (22) zugewandten, ersten Längsseite (36) des Verbindungsabschnitts (14) ausgebildet ist und der Rastvorsprung an der ersten Längsseite (36) bzw. der ersten Seitenwand (22) ausgebildet ist, und
**dass** die zweite Seitenwand (24) den Verbindungsabschnitt (14) an einer zweiten Längsseite (32) desselben, die der ersten Längsseite (36) gegenüberliegt, derart abstützt, dass durch diese Abstützung eine Relativbewegung zwischen dem Raster und dem Rastvorsprung (38) senkrecht zu der ersten Seitenwand (22) verhindert ist.

2. Bügel nach Anspruch 1, **dadurch gekennzeichnet, dass** der Rastvorsprung (38) einer von mehreren gleichartigen Rastvorsprüngen ist, die in Bügellängsrichtung (X) aufeinanderfolgen und ein zweites Raster bilden.

3. Bügel nach Anspruch 1 oder 2, **gekennzeichnet durch** eine Halteeinrichtung (40, 42), die den Verbindungsabschnitt (14) in der Ausnehmung (12) hält, indem sie eine Haltekraft in Richtung quer zu der Bügellängsrichtung (X) bewirkt.

4. Bügel nach Anspruch 3, **dadurch gekennzeichnet, dass** die Halteeinrichtung die Haltekraft durch Kraftschluss bewirkt.

5. Bügel nach Anspruch 4, **dadurch gekennzeichnet, dass** die zweite Seitenwand (24) unter Druck an der zweiten Längsseite (32) anliegt und die Haftreibung dazwischen den Kraftschluss bewirkt.

6. Bügel nach einem der Ansprüche 3 bis 5, **dadurch gekennzeichnet, dass** die Halteeinrichtung (40, 42) die Haltekraft durch Formschluss bewirkt.

7. Bügel nach Anspruch 6, **dadurch gekennzeichnet, dass** die Halteeinrichtung (40, 42) eine in Bügellängsrichtung (X) verlaufende Nut (42) und einen damit in Eingriff stehenden Haltevorsprung (40) umfasst, wobei die Nut (42) in der zweiten Seitenwand (24) oder der zweiten Längsseite (32) des Verbindungsabschnitts (14) ausgebildet ist und der Haltevorsprung (40) an der zweiten Längsseite (32) des Verbindungsabschnitts (14) bzw. der zweiten Seitenwand (24) ausgebildet ist.

8. Bügel nach Anspruch 7, **dadurch gekennzeichnet, dass** der Haltevorsprung (40) als in Bügellängsrichtung (X) verlaufende Leiste ausgebildet ist.

9. Bügel nach Anspruch 6, **dadurch gekennzeichnet, dass** die Halteeinrichtung einen Haltevorsprung (40) aufweist, der am ersten Bügelteil (2) neben der zweiten Seitenwand (24) ausgebildet ist und den Verbindungsabschnitt (14) auf dessen von der Bodenwand (18) abgewandter Längsseite (34) hintergreift.

10. Bügel nach einem der Ansprüche 1 bis 9, **dadurch gekennzeichnet, dass** das zweite Bügelteil (4) im Bereich seines Verbindungsabschnitts (14) im Querschnitt ein U-Profil hat und einen parallel zum Verbindungsabschnitt (14) in Bügellängsrichtung (X) verlaufenden Leistenabschnitt (48) aufweist, der zusammen mit dem Verbindungsabschnitt (14) eine zweite langgestreckte und seitlich offene Ausnehmung (50) begrenzt, in die das erste Bügelteil (2) mit einem Abschnitt (52) eingesetzt ist, der eine der zwei Seitenwände (22) aufweist.

11. Bügel nach Anspruch 10, **dadurch gekennzeichnet, dass** der Leistenabschnitt (48) unter Druck an dem eingesetzten Abschnitt (52) anliegt.

12. Bügel nach Anspruch 10 oder 11, **gekennzeichnet durch** eine in Bügellängsrichtung (X) verlaufende Nut (52)und einen damit in Eingriff stehenden Haltevorsprung (56), wobei die Nut (54) in einer der einander zugewandten Oberflächen des Leistenabschnitts (48) und des eingesetzten Abschnitts (52) ausgebildet ist und der Haltevorsprung (56) an der anderen dieser Oberflächen ausgebildet ist.

13. Bügel nach Anspruch 12, **dadurch gekennzeichnet, dass** der Haltevorsprung (56) als in Bügellängsrichtung (X) verlaufende Leiste ausgebildet ist.

## Geänderte Patentansprüche

### Geänderte Patentansprüche gemäss Regel 137(2) EPÜ.

**1.** Längeneinstellbarer Bügel für eine Brille, mit einem ersten sich in Längsrichtung (X) des Bügels erstreckenden Bügelteil (2) und einem zweiten sich in der Bügellängsrichtung (X) erstreckenden Bügelteil (4),
wobei das erste Bügelteil (2) eine sich in der Bügellängsrichtung (X) erstreckende Ausnehmung (12) aufweist und im Bereich der Ausnehmung (12) im Querschnitt ein U-Profil hat, so dass die Ausnehmung (12) auf einer Längsseite (8) des ersten Bügelteils (2) eine langgestreckte, in Bügellängsrichtung (X) verlaufende Öffnung aufweist und durch eine Bodenwand (18) sowie eine erste und eine zweite, jeweils in Bügellängsrichtung (X) verlaufende Seitenwand (22, 24) begrenzt ist,
wobei das zweite Bügelteil (4) einen Verbindungsabschnitt (14) aufweist, der sich in der Bügellängsrichtung (X) erstreckt und in die Ausnehmung (12) des ersten Bügelteils (2) eingesetzt ist,
wobei die langgestreckte Öffnung derart dimensioniert ist, dass der Verbindungsabschnitt (14) in Richtung (Y) quer zu der Bügellängsrichtung (X) in die Ausnehmung (12) einsetzbar ist,
wobei an dem Verbindungsabschnitt (14) oder am ersten Bügelteil (2) ein Raster aus in der Bügellängsrichtung (X) aufeinander folgenden Rasteinschnitten (30) ausgebildet ist, und
wobei, wenn das Raster am Verbindungsabschnitt (14) ausgebildet ist, in der Ausnehmung (12) oder, wenn das Raster am ersten Bügelteil (2) ausgebildet ist, am Verbindungsabschnitt (14) ein Rastvorsprung (38) ausgebildet ist, der mit einem der Rasteinschnitte (30) in Eingriff steht, wobei eine gewünschte Länge (L) des Bügels einstellbar ist durch Zuordnung des Rastvorsprungs (38) zu einem ausgewählten der Rasteinschnitte (30) des Raster,
**dadurch gekennzeichnet,**
**dass** das Raster an der ersten Seitenwand (22) der Ausnehmung (12) oder an einer der ersten Seitenwand (22) zugewandten, ersten Längsseite (36) des Verbindungsabschnitts (14) ausgebildet ist und der Rastvorsprung an der ersten Längsseite (36) bzw. der ersten Seitenwand (22) ausgebildet ist, und
**dass** die zweite Seitenwand (24) den Verbindungsabschnitt (14) an einer zweiten Längsseite (32) desselben, die der ersten Längsseite (36) gegenüberliegt, derart abstützt, dass durch diese Abstützung eine Relativbewegung zwischen dem Raster und dem Rastvorsprung (38) senkrecht zu der ersten Seitenwand (22) verhindert ist, so dass eine Relativverschiebung in Bügellängsrichtung zwischen dem ersten Bügelteil (2) und dem zweiten Bügelteil (4) nicht möglich ist und die Länge (L) des Bügels beibehalten bleibt, die diesem durch Einsetzen des Verbindungsabschnitts (14) in die Ausnehmung (12) quer zu der Bügellängsrichtung (X) gegeben ist.
